# EUROPEAN PATENT APPLICATION

(11) **EP 2 381 692 A2**
(43) Date of publication of application: **26.10.2011**
(21) Application number: 11163014.1
(22) Date of filing: 19.04.2011
(51) Int. Cl.: H04N 13/00

(54) **Image display apparatus and method for controlling the same**

(30) Priority: 19.04.2010 KR 20100035986
(71) Applicant: LG Electronics, Seoul, 150-721 (KR)
(72) Inventor: Kang, Mingoo, 137-724, SEOUL (KR); Park, Jongsoon, 137-724, SEOUL (KR); Park, Junho, 137-724, SEOUL (KR)
(74) Representative: Cabinet Plasseraud

(57) **Abstract**

An image display apparatus and a method for controlling the same are discussed. The method for controlling an image display apparatus that displays a 3-dimensional (3D) image includes generating first user captured information representing a captured image of a first user of the image display apparatus, receiving second user captured information representing a captured image of a second user of another image display apparatus from a server or the another image display apparatus, and displaying at least one of a 3D object corresponding to the first user captured information and a 3D object corresponding to the second user captured information with a background image.

## Description

### CROSS-REFERENCE TO RELATED APPLICATION

This application claims priority to and the benefit of Korean Patent Application No. 10-2010-0035986, filed on April 19, 2010 in the Korean Intellectual Property Office, the disclosure of which is incorporated herein by reference.

### BACKGROUND OF THE INVENTION

### 1. Field of the invention

Embodiments of the present invention relate to an image display apparatus and a method for controlling the same, and more particularly, to an image display apparatus for displaying a three-dimensional (3D) object representing a user and changing the displayed state of the 3D object in correspondence with a motion that the user has made, and a method for controlling the same.

### 2 Description of the Related Art

An image display apparatus has a function of displaying images to a user. The image display apparatus can display a broadcast program selected by the user on a display from among broadcast programs transmitted from broadcasting stations. The recent trend in broadcasting is a worldwide shift from analog broadcasting to digital broadcasting.

As it transmits digital audio and video signals, digital broadcasting offers many advantages over analog broadcasting, such as robustness against noise, less data loss, ease of error correction, and the ability to provide high-definition, clear images. Digital broadcasting also allows interactive viewer services, compared to analog broadcasting.

Extensive research has recently been conducted on 3D images and a variety of content items that can be provided through 3D images. In addition, 3D stereoscopy has been widely used and commercialized in various environments and technologies. 3D images can be transmitted by the afore-described digital broadcasting and an apparatus for reproducing such 3D images is under development.

### SUMMARY OF THE INVENTION

Therefore, one or more embodiments of the present invention have been made in view of the above problems, and it is an object of one or more embodiments of the present invention to provide an image display apparatus for providing a three-dimensional (3D) image and a method for controlling the same.

It is another object of one or more embodiments of the present invention to provide an image display apparatus for enabling a user to identify a motion that a user of another image display apparatus has made through a 3D object and a method for controlling the same.

It is a further an object of one or more embodiments of the present invention to provide an image display apparatus that can be connected to another image display apparatus through a network and a method for controlling the same.

In accordance with an aspect of the present invention, the above and other objects can be accomplished by the provision of a method for controlling an image display apparatus that displays a 3D image, the method including generating first user captured information representing a captured image of a first user of the image display apparatus, receiving second user captured information representing a captured image of a second user of another image display apparatus from a server or the another image display apparatus, and displaying at least one of a 3D object corresponding to the first user captured information and a 3D object corresponding to the second user captured information with a background image.

In accordance with another aspect of the present invention, there is provided a method for controlling an image display apparatus, the method including generating motion information representing a motion of a user, transmitting the motion information to a server that combines motion information received from at least two image display apparatuses, receiving a signal including motion information representing a motion of a user of another image display apparatus other than the image display apparatus from the server, and displaying at least two viewpoint images of a 3D object corresponding to the user of the second image display apparatus based on the received signal with a background image.

In accordance with a further aspect of the present invention, there is provided an image display apparatus that displays a 3D image, the method including a camera module configured to capture an image of a first user of the image display apparatus, a network interface configured to transmit first user captured information representing the captured image of the first user of the image display apparatus to a server or another image display apparatus other than the image display apparatus, or receive second user captured information representing a captured image of a second user of the another image display apparatus from the server or the another image display apparatus, and a controller configured to control display of at least one of a 3D object corresponding to the at least one of the first user captured information and a 3D object corresponding to the second user captured information on the display with a background image.

### BRIEF DESCRIPTION OF THE DRAWINGS

The above and other objects, features and other advantages of one or more embodiments of the present invention will be more clearly understood from the following detailed description taken in conjunction with the accompanying drawings, in which:

FIG. 1 illustrates a configuration of an image display system according to an embodiment of the present invention;

FIG. 2 is a block diagram of an image display apparatus according to an embodiment of the present invention;

FIG. 3 is a block diagram of a controller in the image display apparatus illustrated in FIG. 2;

FIG. 4 illustrates three-dimensional (3D) formats for rendering 3D images;

FIG. 5 illustrates various methods for scaling a 3D image according to an embodiment of the present invention;

FIGS. 6 and 7 illustrate different depth illusions of 3D images or 3D objects according to an embodiment of the present invention;

FIGS. 8 and 9 are flowcharts illustrating methods for controlling an operation of the image display apparatus according to embodiments of the present invention;

FIG. 11 illustrates an image display system including image display apparatuses and a network server according to an embodiment of the present invention; and

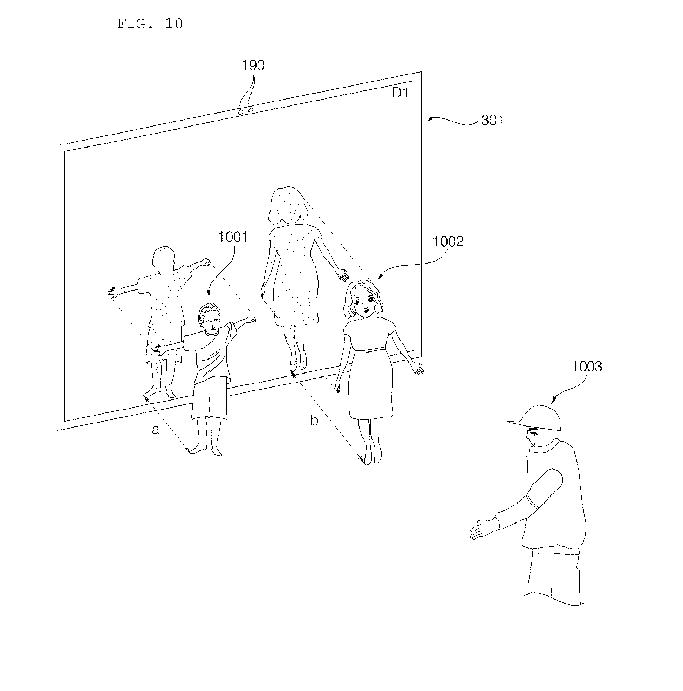

FIGS. 10 and 12 to 16B are views referred to for describing screens displayed on the image display apparatus according to embodiments of the present invention.

### DETAILED DESCRIPTION OF THE PREFERRED EMBODIMENTS

Embodiments of the present invention will be described below with reference to the attached drawings.

The terms "module" and "unit" used to signify components are used herein to help the understanding of the components and thus they should not be considered as having specific meanings or roles. Accordingly, the terms "module" and "unit" may be used interchangeably.

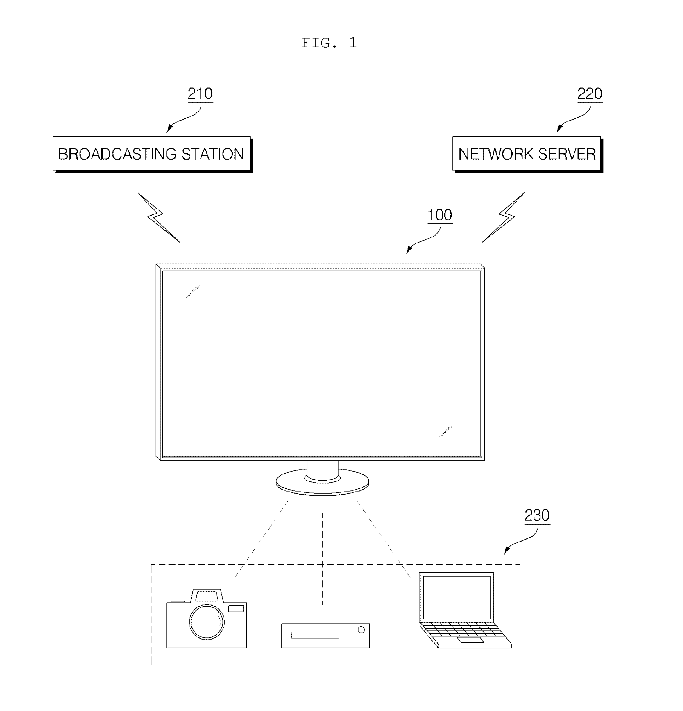

FIG.1 illustrates a configuration of an image display system according to an embodiment of the present invention. Referring to FIG. 1, an image display apparatus 100 may communicate with a broadcasting station 210, a network server 220, or an external device 230.

The image display apparatus 100 may receive a broadcast signal including an audio signal, a video signal and/or a data signal from the broadcasting station 210. The image display apparatus 100 may process the audio and video signals of the broadcast signal and/or the data signal of the broadcast signal, suitably for transmission from the image display apparatus 100. The image display apparatus 100 may output images and/or sound based on the processed video and/or audio signal, as well as data based on the processed data signal.

Meanwhile, the image display apparatus 100 may communicate with the network server 220. The network server 200 is capable of transmitting signals to and receiving signals from the image display apparatus 100 over a network. For example, the network server 220 may be a portable terminal that can be connected to the image display apparatus 100 through a wired or wireless base station. In addition, the network server 200 may provide content to the image display apparatus 100 over the Internet. A content provider may provide content to the image display apparatus 100 through the network server 220.

The image display apparatus 100 may communicate with the external device 230. The external device 230 can transmit and receive signals directly to and from the image display apparatus 100 wirelessly or by cable. For instance, the external device 230 may be a media storage device or a player. That is, the external device 230 may be any of a camera, a DVD player, a Blu-ray player, a PC, etc.

At least one of the broadcasting station 210, the network server 220 and the external device 230 may transmit a signal including an audio signal, a video signal and/or a data signal to the image display apparatus 100. The image display apparatus 100 may display an image based on the video signal included in the received signal. Also, the image display apparatus 100 may transmit a signal received from the broadcasting station 210 or the network server 220 to the external device 230, and may transmit a signal received from the external device 230 to the broadcasting station 210 or the network server 220. That is, the image display apparatus 100 may transmit content included in signals received from the broadcasting station 210, the network server 220, and the external device 230, as well as playback the content immediately.

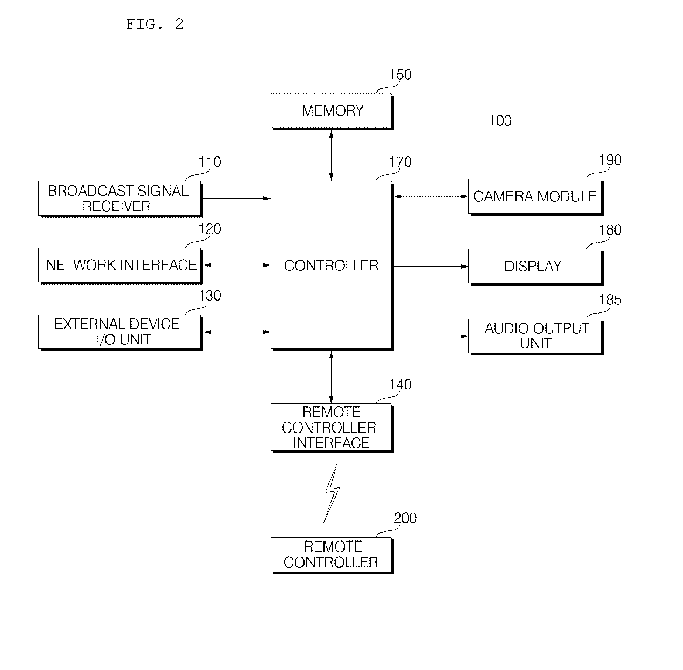

FIG. 2 is a block diagram of the image display apparatus according to an embodiment of the present invention. Referring to FIG. 2, the image display apparatus 100 according to the embodiment of the present invention includes a broadcast signal receiver 110, a network interface 120, an external device Input/Output (I/O) unit 130, a remote controller interface 140, a memory 150, a controller 170, a display 180, an audio output unit 185, and a camera module 190.

The broadcast signal receiver 110 may receive a Radio Frequency (RF) broadcast signal corresponding to a channel selected by a user or a number of RF broadcast signals corresponding to all broadcast channels previously added to the image display apparatus 100 from among a plurality of RF broadcast signals received through an antenna from the broadcasting station (210 in FIG.1) and may downconvert the RF broadcast signal into a digital Intermediate Frequency (IF) signal or an analog baseband AudioNideo (AN) signal.

The broadcast signal receiver 110 may be capable of receiving RF broadcast signals from an Advanced Television Systems Committee (ATSC) single-carrier system or from a Digital Video Broadcasting (DVB) multi-carrier system. In addition, the broadcast signal receiver 110 may sequentially select a number of RF broadcast signals corresponding to all broadcast channels previously added to the image display apparatus 100 by a channel add function from among a plurality of RF signals received through the antenna, and may downconvert the selected RF broadcast signals into IF signals or baseband AN signals. This operation is performed to display a thumbnail list including a plurality of thumbnail images corresponding to broadcast channels on the display 180. Therefore, the broadcast signal receiver 110 may sequentially/periodically receive an RF broadcast signal of a selected channel or RF broadcast signals of all previously stored channels.

The network interface 120 interfaces between the image display apparatus 100 and a wired/wireless network such as the Internet or between the image display apparatus 100 and the network server (220 in FIG.1).

For wireless connection of the image display apparatus 100 to the Internet, the network interface 120 may include a wireless communication module. For the wireless connectivity, the network interface 120 may operate in conformance with communication standards such as Wireless Local Area Network (WLAN) (i.e. Wi-Fi), Wireless Broadband (WiBro), World Interoperability for Microwave Access (WiMax), and High Speed Downlink Packet Access (HSDPA). Other communication standards may also be used.

The network interface 120 may receive content or data from a content provider or a network provider over a network. The received content or data may include content such as games, Video-on-Demand (VoD) files, and broadcast signals, and information related to the content. The network interface 120 may also receive update information and update files of firmware from a network operator.

The network interface 120 may be connected to a communication network for enabling video or voice calls. The term 'communication network' as used herein covers a broadcasting communication network, a Public Switched Telecommunication Network (PSTN), and a mobile communication network, which are connected via a LAN.

The external device I/O unit 130 may connect the external device (230 in FIG. 1) to the image display apparatus 100. For the purpose, the external device I/O unit 130 may include an AN I/O unit or a wireless communication module.

The external device I/O unit 130 is connected wirelessly or by cable to an external device such as a Digital Versatile Disc (DVD) player, a Blu-ray player, a game console, a camera, a camcorder, or a computer (e.g., a laptop computer). Then, the external device I/O unit 130 externally receives video, audio, and/or data signals from the external device and transmits the received external input signals to the controller 170. In addition, the external device I/O unit 130 may output video, audio, and data signals processed by the controller 170 to the external device.

In order to receive or transmit AN signals from or to the external device, the AN I/O unit of the external device I/O unit 130 may include at least one of an Ethernet port, a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, or a D-sub port, as well as others.

The wireless communication module of the external device I/O unit 130 may conduct wireless communication with other external devices. For the wireless communication, the wireless communication module may be connected to other external devices over a network according to communication standards such as Bluetooth, Radio Frequency Identification (RFID), Infrared Data Association (IrDA), Ultra WideBand (UWB), and Zigbee. Other communication standards may also be used.

The external device I/O unit 130 may be connected to various set-top boxes through at least one of the afore-mentioned ports and may thus receive data from or transmit data to the various set-top boxes.

For example, the external device I/O unit 130 may be connected to an IPTV set-top box. To enable interactive communication, the external device I/O unit 130 may provide video, audio and/or data signals received from the IPTV set-top box to the controller 170 and provide signals processed by the controller 170 to the IPTV set-top box.

The term 'IPTV' as used herein covers a broad range of services, depending on transmission networks, such as Asynchronous Digital Subscriber Line-TV (ADSL-TV), Very high data rate Digital Subscriber Line-TV (VDSL-TV), Fiber To The Home-TV (HTTH-TV), TV over DSL, Video over DSL, TV over IP (TVIP), Broadband TV (BTV), and Internet TV and full-browsing TV which are capable of providing Internet access services, as well as other services.

The remote controller interface 140 may include a wireless communication module which wirelessly transmits signals to and/or wirelessly receives signals from a remote controller 200, and a coordinate calculator which calculates a pair of coordinates representing the position of a pointer on the display 180, which is to be moved in accordance with the movement of the remote controller 200. The remote controller interface 140 may wirelessly transmit RF signals to and/or wirelessly receive RF signals from the remote controller 200 through an RF module and may wirelessly receive IR signals from the remote controller 200 through an IR module according to the IR communication standard.

The coordinate calculator may receive motion information regarding the movement of the remote controller 200 from the wireless communication module and may calculate a pair of coordinates (x, y) representing the position of the pointer on a screen of the display 180 by correcting the motion information for possible errors such as user hand tremor.

A signal received in the image display apparatus 100 from the remote controller 200 through the remote controller interface 140 may be transmitted to the controller 170. Then, the controller 170 may acquire information regarding the movement of the remote controller 200 and information regarding a key manipulation detected from the remote controller from the signal received from the remote controller 200, and may control the image display apparatus 100 based on the acquired information.

In another example, the remote controller 200 may calculate the coordinates of the pointer in correspondence with a motion of the remote controller 200 and transmit the coordinates to the remote controller interface 140. In this case, the remote controller interface 140 may not correct errors in the coordinates of the pointer, prior to transmission to the controller 170.

The memory 150 may store a video signal received at the image display apparatus 100 and an audio signal and/or a data signal associated with the video signal. For example, a video recording command may be input to the image display apparatus 100 during playing a video based on a broadcast signal. The image display apparatus 100 may store at least a part of the video in the memory 150 in response to the video recording command. Upon receipt of a video playback command, the image display apparatus 100 may refer to the video signal and the audio and/or data signal associated with the video signal, which are stored in the memory 150 and may play back the video based on the video, audio and/or data signals.

The controller 170 provides overall control to the image display apparatus 100. The controller 170 may receive a signal from the remote controller 200 or any other kind of control command input device, or may receive a command through a local key of the image display apparatus 100. The controller 170 identifies the command included in the received signal or the command corresponding to the input of the local key and controls the image display apparatus 100 according to the command.

For example, upon receipt of a channel selection command from a user, the controller 170 may control the broadcast signal receiver 110 to receive a broadcast signal on a channel selected in accordance with the channel selection command, process the video and audio signals of the broadcast signal, and output the processed video and audio signals to the display 180 and the audio output unit 185, respectively. In addition, the controller 170 may output information about the user-selected channel along with video and audio signals to the display 180 or the audio output unit 185.

The controller 170 may process a video or audio signal based on information included in a data signal received along with the video or audio signal. For example, the controller 170 may identify the format of a video signal input to the image display apparatus 100 using a data signal associated with the video signal and process the video signal according to the identified format.

The controller 170 may generate an On Screen Display (OSD) signal for displaying an OSD related to an image based on a video signal, using a data signal associated with the video signal. In addition, the controller 170 may create a graphical user interface through which the user can check information about the image display apparatus 100 or enter a control command to the image display apparatus 100.

The user may input a video or audio output command using the remote controller 200 or any other kind of control command input device. For instance, the user may want to view an image captured by a camera or a camcorder through the external device I/O unit 130. Then the controller 170 may process a video or audio signal received through the USB port of the external device I/O unit 130 so that an image or sound corresponding to the video or audio signal can be output to the display 180 or the audio output unit 185.

Meanwhile, the controller 170 may determine the position of the user or identify the user's gesture based on an image captured by the camera module 190. For example, the controller 170 may calculate the distance between the user and the image display apparatus 100 (a z-axis coordinate) in addition to the x-axis and y-axis coordinates of the user on the display 180.

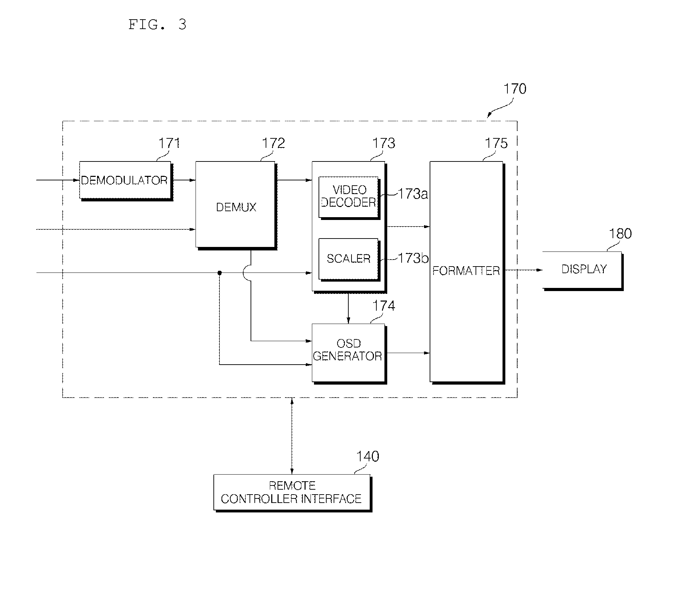

In an embodiment of the present invention, the controller 170 may process an external input two-dimensional (2D) or 3D video signal so that the 2D or 3D signal can be displayed on the display 180. The controller 170 may also process a video signal to display a graphical user interface in 3D on the display 180. The configuration of the controller 170 will be described later in greater detail with reference to FIG. 3.

The display 180 may generate drive signals by converting a processed video signal, a processed data signal, an OSD signal, and a control signal received from the controller 170 or a video signal and a data signal received from the external device I/O unit 130 and display screens on the display 180 according to the drive signals. The display 180 may be various types of displays such as a Plasma Display Panel (PDP), a Liquid Crystal Display (LCD), an Organic Light-Emitting Diode (OLED) display, and a flexible display, as well as other displays. The display 180 is capable of displaying 3D images according to an embodiment of the present invention.

For 3D visualization, the display 180 may be configured into an auto-stereoscopic 3D display (glasses-free) or a traditional stereoscopic 3D display (with glasses). Auto-stereoscopy is any method of displaying 3D images without any additional display, for example, polarized glasses on the part of a user. Thus, the display 180 displays 3D images on its own. Renticular and parallax barrier are examples of auto-stereoscopic 3D imaging.

The traditional stereoscopy requires an additional display besides the display 180 in order to display 3D images. The additional display may be a Head Mount Display (HMD) type, a glasses type, etc. As special 3D glasses, polarized glasses, shutter glasses, and spectrum filters are available.

The display 180 may also be a touch screen that can be used not only as an output device but also as an input device. The audio output unit 185 may receive a processed audio signal (e.g., a stereo signal, a 3.1-channel signal or a 5.1-channel signal) from the controller 170 and output the received audio signal as sound, such as voice. The audio output unit 185 may be various types of speakers.

The camera module 190 captures one or more images of the user. To locate the user, the camera module 190 may be configured with a single camera, which does not limit one or more embodiments of the present invention. Hence, the camera module 190 may include a plurality of cameras. For 3D visualization, the camera module 190 includes left-eye and right-eye cameras, by way of example. Image information captured by the camera module 190 is input to the controller 170.

To sense a user's gesture, the image display apparatus 100 may further include a sensor unit that has at least one of a touch sensor, a voice sensor, a position sensor, or a motion sensor, as stated before. A signal sensed by the sensor unit may be output to the controller 170 through the remote controller interface 140. The controller 170 may sense a user's gesture from an image captured by the camera module 190 or a signal sensed by the sensor unit, or by combining the captured image and the sensed signal.

The remote controller 200 transmits a user input to the remote controller interface 140. For the transmission of a user input, the remote controller 200 may operate based on various communication standards such as Bluetooth, RF, IR, UWB and ZigBee. In addition, the remote controller 200 may receive a video signal, audio signal and/or data signal from the remote controller interface 140 and output the received signal as an image or sound.

The above-described image display apparatus 100 may be a fixed digital broadcast receiver capable of receiving at least one of ATSC (8-VSB) broadcast programs, DVB-T (COFDM) broadcast programs, and ISDB-T (BST-OFDM) broadcast programs, as well as others. Alternatively, the image display apparatus 100 may be a mobile digital broadcast receiver capable of at least one of terrestrial DMB broadcast programs, satellite DMB broadcast programs, ATSGM/H broadcast programs, DVB-H (COFDM) broadcast programs, and Media Forward Link Only (MediaFLO) broadcast programs, or a mobile digital broadcast receiver capable of receiving cable, satellite and/or IPTV broadcast programs, as well as others.

The image display apparatus 100 as set forth herein may be any of a TV receiver, a mobile phone, a smart phone, a laptop computer, a digital broadcast terminal, a Personal Digital Assistant (PDA), a Portable Multimedia Player (PMP), etc.

The block diagram of the image display apparatus 100 illustrated in FIG. 2 is an example embodiment of the present invention. The image display apparatus 100 is shown in FIG. 2 as having a number of components in a given configuration. However, the image display apparatus 100 may include fewer components or more components than those shown in FIG. 2 in alternative embodiments. Also, two or more components of the image display apparatus 100 may be combined into a single component or a single component thereof may be separated into two more components in alternative embodiments. The functions of the components of the image display apparatus 100 as set forth herein are illustrative in nature and may be modified, for example, to meet the requirements of a given application.

FIG. 3 is a block diagram of the controller illustrated in FIG. 2. Referring to FIG. 3, the controller 170 may include a demodulator 171, a Demultiplexer (DEMUX) 172, a decoder 173, an OSD generator 174, and a formatter 175 according to an embodiment of the present invention.

The demodulator 171 may demodulate a broadcast signal received from the broadcast signal receiver 110. For example, the demodulator 171 receives the digital IF signal DIF from the broadcast signal receiver 110 and demodulates the digital IF signal DIF. The demodulator 171 may also perform channel decoding on the digital IF signal DIF. For channel decoding, the demodulator 171 may include a convolutional decoder, a de-interleaver and a Reed-Solomon decoder so as to perform convolutional decoding, de-interleaving and Reed-Solomon decoding.

The demodulator 171 may obtain a stream signal TS by perform demodulation and channel decoding on the digital IF signal DIF received from the broadcast signal receiver 110. The stream signal TS may be a signal in which a video signal, an audio signal and a data signal are multiplexed. For example, the stream signal TS may be an MPEG-2 TS signal obtained by multiplexing an MPEG-2 video signal and a Dolby AC-3 audio signal. An MPEG-2 TS may include a 4-byte header and a 184-byte payload.

In order to properly handle not only ATSC signals but also DVB signals, the demodulator 171 may include an ATSC demodulator and a DVB demodulator. The stream signal TS may be input to the DEMUX 172.

The DEMUX 172 demultiplexes an input stream, for example, an MPEG-2 TS into a video signal, an audio signal, and a data signal. The input stream signal may be received from the demodulator 171, the network interface 120, or the external device I/O unit 130.

For example, if the data signal is a coded signal, the coded data signal may carry an Electronic Program Guide (EPG) which includes broadcast information specifying the start time, end time, etc., of scheduled broadcast TV or radio programs. The EPG includes ATSC-Program and System Information Protocol (PSIP) information in case of ATSC and DVB-Service Information (SI) in case of DVB.

The decoder 173 may decode the demultiplexed signals. The decoder 193 may include a video decoder 173a for decoding the demultiplexed video signal and a scaler 173b for scaling the resolution of the decoded video signal so that the video signal can be displayed on the display 180.

The OSD generator 174 may generate an OSD signal to display an object in OSD on the display 180. The OSD signal may provide information related to an image displayed on the display 180. The OSD signal may include a User Interface (UI) through which to receive a control signal for controlling an operation of the image display apparatus 100 or a user command.

In accordance with an embodiment of the present invention, the OSD generator 174 may extract thumbnail images corresponding to play time points of content being reproduced or reproducible on the image display apparatus 100. The OSD generator 174 may generate an OSD signal and output it to the formatter 175 such that a 3D object including an extracted thumbnail image can be viewed by the user.

The formatter 175 may identify the format of a received video signal, referring to a data signal related to the video signal. The formatter 175 may convert the video signal to a format suitable for the display 180 and then output the video signal to the display 180.

In this embodiment, the image display apparatus 100 is capable of displaying 3D images on the display 180. Particularly, the formatter 175 may generate a 3D video signal in a format suitable for the display 180, from an input video signal. The 3D video signal may include a left-eye image signal and/or a right-eye image signal. As described before, the left-eye image signal and the right-eye image signal may be combined into a 3D image. Specifically, the left-eye image signal and the right-eye image signal are used to display a left-eye image and a right-eye image, respectively. The formatter 175 outputs the 3D video signal to the display 180. The display 180 displays a 3D image based on the 3D video signal.

In the embodiment of the present invention, the image display apparatus 100 may display an OSD in the form of a 3D object according to an OSD signal generated from the OSD generator 174. For this purpose, the formatter 175 may convert the OSD signal to a 3D video signal in the format suitable for the display 180 so that the multi-viewpoint images of the 3D object, for example, the left-eye and right-eye images of the 3D object can be displayed on the display 180.

The image display apparatus 100, which has a UI generator, may further include a mixer for mixing video signals received from the decoder 173 and the OSD generator 174 with a UI video signal received from the UI generator. The mixer may reside within the formatter 175.

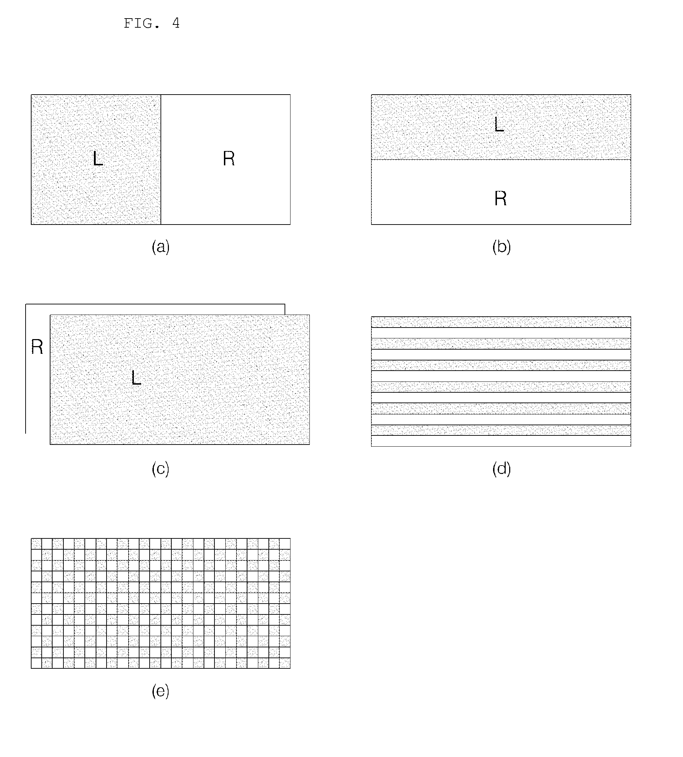

FIG. 4 illustrates 3D formats for rendering 3D images. The 3D formats may depend on the layouts of the left-eye and right-eye images of a 3D image. A 3D image is rendered using its multi-viewpoint images. A user can see the multi-viewpoint images with his or her left and right eyes. The disparity (for example, of distance, or simply the distance) between images viewed by the left and right eyes tricks the user into perceiving them as a 3D image. The multi-viewpoint images are a left-eye image perceived by the user's left eye and a right-eye image perceived by the user's right eye in this embodiment.

For 3D visualization, 3D formats illustrated in FIG. 4 are available. The 3D formats are a side-by-side format ((a) of FIG. 4), a top/down format ((b) of FIG. 4), a frame sequential format ((c) of FIG. 4), an interlaced format ((d) of FIG. 4), and a checker box format ((e) of FIG. 4). A left-eye image L and a right-eye image R are arranged side by side in the side by side format. The left-eye image L and the right-eye image R are stacked vertically in the top/down format, while they are arranged in time division in the frame sequential format. In the interlaced format, the left-eye image L and the right-eye image R alternate line by line. The left-eye image L and the right-eye image R are mixed on a box basis in the checker box format.

A video signal included in an external signal received at the image display apparatus 100 and a graphic user interface video signal generated from the OSD generator 174, for representing information about the image display apparatus 100 or entering a command to the image display apparatus 100 may be a 3D video signal.

The formatter 175 may mix the 3D video signals and output the mixed signal to the display 180. The formatter 175 may identify the format of the mixed 3D video signal referring to a related data signal and process the 3D video signal according to the identified format.

If the display 180 is limited to a specific 3D format, the formatter 175 may convert the received 3D video signal to the specific 3D format. For instance, upon receipt of left-eye and right-eye images in the side by side format illustrated in (a) of FIG. 4, the formatter 175 may re-arrange the left-eye and right-eye images in the interlaced format preset for the display 180.

The OSD generator 174 may generate an OSD signal. For example, the OSD generator 174 may generate an OSD signal by which a variety of information is displayed as graphics or text on the display 180, according to at least one of a video signal or a data signal or a user input signal received from the remote controller 200 or any other kind of control command input device. In addition, the OSD generator 174 may generate an OSD signal by which graphics or text is displayed to allow input of a control command to the image display apparatus 100. The OSD signal may be provided together with processed video and data signals to the display 180.

The OSD signal may include various data such as a UI, a variety of menus, widgets, icons, etc. Also, the OSD signal may be a 2D or 3D signal. The OSD signal may also include a graphic user interface 3D image signal mixed with another video signal by the formatter 175.

The display 180 may display an object in accordance with an OSD signal generated from the OSD generator 174. In an embodiment of the present invention, the object may be one of a volume button, a channel button, a control menu, an icon, a navigation tab, a scroll bar, a progressive bar, a text box, a window, etc.

The user can obtain information about the image display apparatus 100 or information about an image displayed on the image display apparatus 100, from the object displayed on the display 180. Further, the user can enter a command to the image display apparatus 100 using an object displayed on the image display apparatus 100. The 3D object refers to an object with stereoscopic effects to a viewer, which in one or more embodiments of the present invention, may be implemented by way use of a display device or by way of a display device and a another device. A Picture-in-Picture (PIP) image, an EPG, menus, widgets, icons, etc., may be configured into 3D objects.

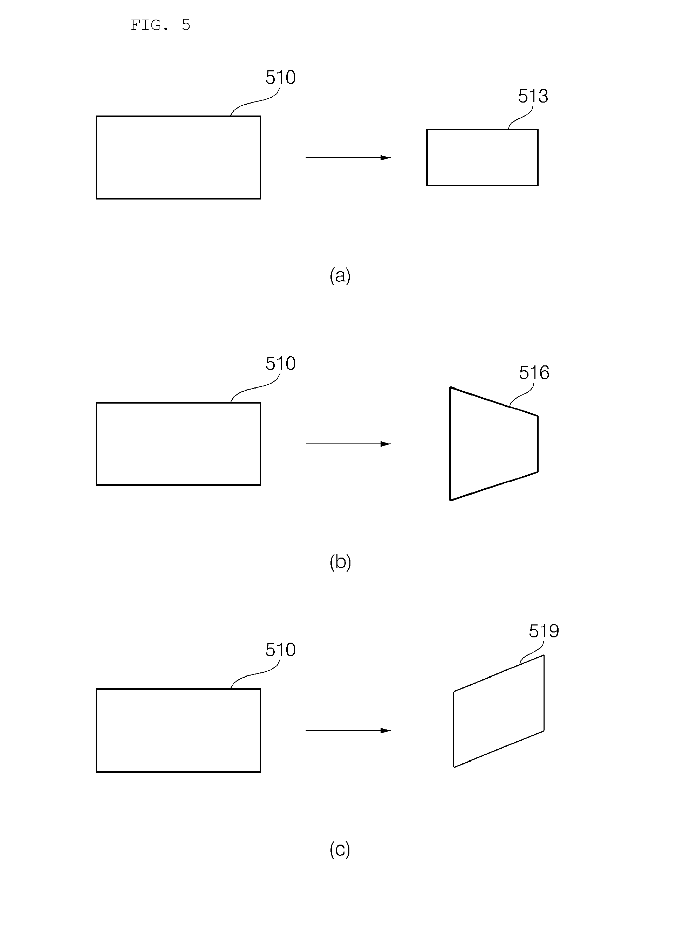

FIG. 5 illustrates various scaling of an image rendered based on a 3D video signal and the resulting various shapes of the image according to an embodiment of the present invention. Scaling the size of a 3D object or control of the inclination of the 3D object will be described below with reference to FIG. 5.

A video processing module such as the scaler 173b of the controller 170 scales up or down a whole 3D image or 3D object 510 at a predetermined ratio. Thus the 3D image or object 510 is contracted into a 3D image or object 513 in (a) of FIG. 5.

To render an image rotated at a predetermined angle or an image inclined in a predetermined direction, the controller 170 may generate or transform a 3D image or object in the form of a polygon such as a parallelogram or a trapezoid.

The controller 170 may render an image rotated at a predetermined angle or an image inclined in a predetermined direction based on a video signal received from the broadcast station 210, the network server 220, or the external device 230 illustrated in FIG. 1, or based on a video signal internally generated in the controller 170. For this purpose, the video processing module such as the scaler 173b of the controller 170 may generate a 3D image or object in the form of a trapezoid 516 in (b) of FIG. 5 or a parallelogram 519 in (c) of FIG. 5.

Through scaling or inclination control of a 3D image or object based on a 3D video signal displayed on the display 180, the controller 170 can reinforce the depth, that is, 3D effect of the 3D image or object.

As stated before, the formatter 175 of the controller 170 may be responsible for scaling a 3D image or object. In FIG. 5, a 3D video signal may be a left-eye image signal, a right-eye image signal, or a combination of both. The formatter 175 separates a 2D video signal or a 3D video signal from a received decoded video signal and further divides the 3D video signal into a left-eye image signal and a right-eye image signal. The formatter 175 may then scale the left-eye and right-eye image signals to one of various shapes illustrated in FIG. 5 and output the scaled images in a format illustrated in FIG. 4. The scaling may precede or follow output formatting.

The formatter 175 may receive an OSD signal generated from the OSD generator 174 or an OSD signal mixed with a decoded video signal, separate a 3D video signal from the received OSD signal, and divide the 3D video signal into a plurality of viewpoint images. For example, the 3D video signal may be separated into left-eye and right-eye image signals, scaled as illustrated in FIG. 5, and output in a format illustrated in FIG. 4.

The OSD generator 174 may scale a 3D image or object generated out of an OSD signal received from the OSD generator 174. If the OSD generator 174 scales the OSD signal, the formatter 175 does not need to scale the OSD signal. In this case, beyond simple OSD signal generation, the OSD generator 174 further scales the OSD signal according to the depth or inclination of the OSD and outputs the scaled OSD signal in a suitable format, for example, a format illustrated in FIG. 4. The output format of the OSD generator 174 may be identical to that of the formatter 175.

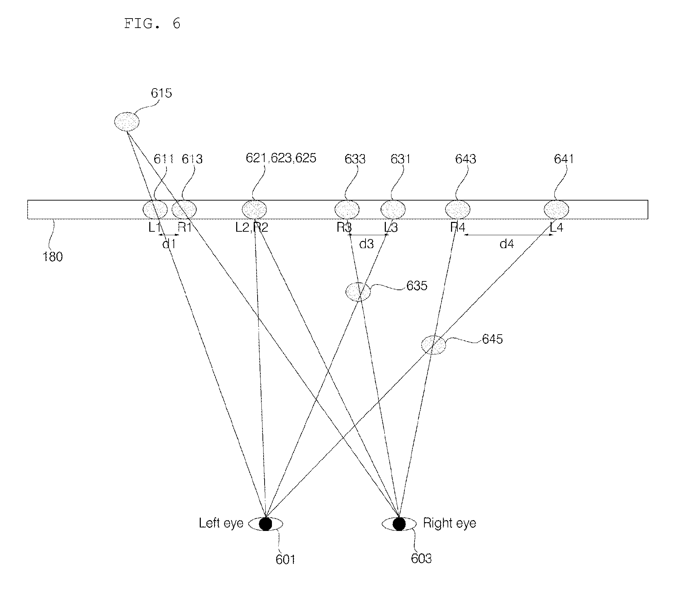

FIG. 6 illustrates different depth illusions of 3D images or 3D objects according to an embodiment of the present invention. As described before, a 3D image is formed with multi-viewpoint images in the embodiment of the present invention. The multi-viewpoint images may be the left-eye and right-eye images of the 3D image. Images are formed at different positions on the part of a user, according to the disparities (or distances) between the left-eye and right-eye images of the images, as illustrated in FIG. 6. With reference to FIG. 6, a sense of 3D or a sense of perspective that the user feels about an image according to the disparity (for example, of distance, or simply the distance) between the left-eye and right-eye images of the image will be described below.

Referring to FIG. 6, there are first to fourth images or objects 615, 625, 635 and 645 rendered with different senses of depth. The first object 615 is composed of a first left-eye image based on a first left-eye image signal and a first right-eye image based on a first right-eye image signal. That is, a video signal for displaying the first object 615 is created using the first left-eye and right-eye image signals. In FIG. 6, the positions of the first left-eye image based on the first left-eye image signal and the first right-eye image based on the first right-eye image signal, and the disparity (for example, of distance, or simply the distance) between the first left-eye and right-eye images are shown. The same description applies to the second, third and fourth objects 625, 635 and 645. For sake of convenience of description, reference numerals or characters that denote left-eye and right-eye images displayed on the display 180 to create an object, the disparity (for example, of distance, or simply the distance) between the two images, and the object will be uniformly given.

The first object 615 is created by combining a first left-eye image 611 (L1) with a first right-eye image 613 (R1), with a disparity (for example, of distance, or simply the distance) d1 between the first left-eye and right-eye images 611 and 613. The user sees an image as formed at the intersection between a line connecting a left eye 601 to the first left-eye image 611 and a line connecting a right eye 603 to the first right-eye image 613. Therefore, the user is tricked into perceiving the first object 615 as behind the display 180. The distance between the display 180 and the first object 615 is represented as a depth. When a 3D object is perceived to the user as being positioned behind the display 180, the depth of the 3D object is negative-signed. Therefore, the depth of the first object 615 is a negative value.

The second object 625 is created with a second left-eye image 621 (L2) and a second right-eye image 623 (R2) on the display 180. Since the second left-eye and right-eye images 621 and 623 are at the same position on the display, the disparity (for example, of distance, or simply the distance) between the second left-eye and right-eye images 621 and 623 is 0. The user sees an image as formed at the intersection between a line connecting the left eye 601 to the second left-eye image 621 and a line connecting the right eye 603 to the second right-eye image 623. Therefore, the user perceives the second object 625 as positioned on the display 180. In this case, it can be said that the second object 625 is a 2D object. The second object 625 has the same depth as the display 180, that is, a depth of 0.

The third and fourth objects 635 and 645 are examples of 3D objects perceived as protruding toward the user. It may be noted from the third and fourth objects 635 and 645 that the user feels different senses of perspective or different senses of 3D according to different disparities (or distances) between left-eye and right-eye images.

The third object 635 is created by combining a third left-eye image 631 (L3) with a third right-eye image 633 (R3), with a disparity (for example, of distance, or simply the distance) d3 between the third left-eye and right-eye images 631 and 633. The user sees an image as formed at the intersection between a line connecting the left eye 601 to the third left-eye image 631 and a line connecting the right eye 603 to the third right-eye image 633. Therefore, the user is tricked into perceiving the third object 635 as positioned before the display 180, that is, toward the user. In other words, the user perceives the third object 635 as protruding toward the user from the display 180. Since a 3D object perceived as being positioned before the display 180 has a positive depth value, the depth of the third object 635 is positive-signed.

The fourth object 645 is created by combining a fourth left-eye image 641 (L4) with a fourth right-eye image 643 (R4), with a disparity (for example, of distance, or simply the distance) d4 between the fourth left-eye and right-eye images 641 and 643 d3 and d4 are placed in the relationship of d3<d4. The user sees an image as formed at the intersection between a line connecting the left eye 601 to the fourth left-eye image 641 and a line connecting the right eye 603 to the fourth right-eye image 643. Therefore, the user is tricked into perceiving the fourth object 645 as positioned before the display 180, that is, toward the user, particularly nearer to the user than the third object 635. That is, the user perceives the fourth object 645 as more protruding toward the user from the display 180 than the third object 635. The depth of the fourth object 645 is positive-signed.

The image display apparatus 100 may control the positions of left-eye and right-eye images displayed on the display 180 so that an object created with the left-eye and right-eye images can be perceived to the user as positioned behind or before the display 180. In addition, the image display apparatus 100 may control the depth illusion of the object created with the left-eye and right-eye images by controlling the disparity (for example, of distance, or simply the distance) between the left-eye and right-eye images displayed on the display 180.

It is noted from FIG. 6 that an object formed with a left-eye image and a right-eye image has a positive or negative depth value according to the positions of the left-eye and right-eye images on the display 180. As stated before, an object having a positive depth value is perceived as protruding to the user, whereas an object having a negative depth value is perceived as receding from the user.

FIG. 6 also reveals that the depth illusion of an object, that is, the distance between the display 180 and the position at which a 3D image is perceived as being formed is changed according to the absolute value of the disparity (for example, of distance, or simply the distance) between the left-eye and right-eye images of the object.

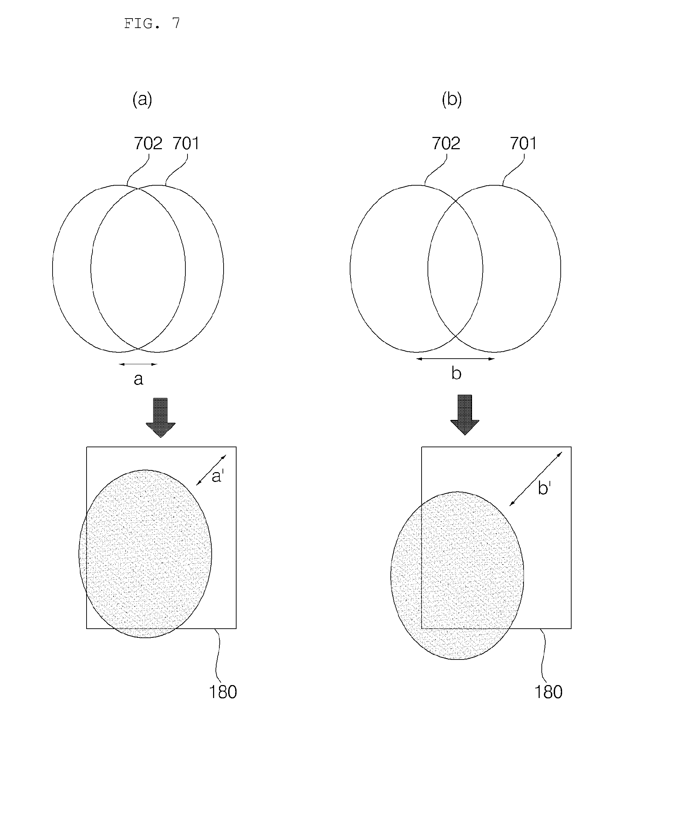

FIG. 7 illustrates operations for controlling the depth illusion of an image according to an embodiment of the present invention. Referring to FIG. 7, the depth illusion of the same image or 3D object varies with the disparity (for example, of distance, or simply the distance) between left-eye and right-eye images 701 and 702 that form the image or 3D object on the display 180. In this example embodiment, the display 180 has a depth of 0 and the depth of an image perceived as protruding from the display 180 is a positive value.

The disparity (for example, of distance, or simply the distance) a between the left-eye image 701 and the right-eye image 702 in (a) of FIG. 7 is smaller than the disparity (for example, of distance, or simply the distance) b between the left-eye image 701 and the right-eye image 702 in (b) of FIG. 7. That is, the left-eye image 701 is farther from the right-eye image 702 in FIG. 7B than in (a) of FIG. 7.

As described before with reference to FIG. 6, a 3D image or 3D object is seen deeper (e.g., more protruding or receding) in (b) of FIG. 7 than in (a) of FIG. 7. If the depths of two cases are quantified and denoted by a' and b', respectively, the relationship of a'<b' is also established because a<b. That is, the depth of the 3D image increases or decreases by widening or narrowing the disparity (for example, of distance, or simply the distance) between the left-eye image 701 and the right-eye image 702.

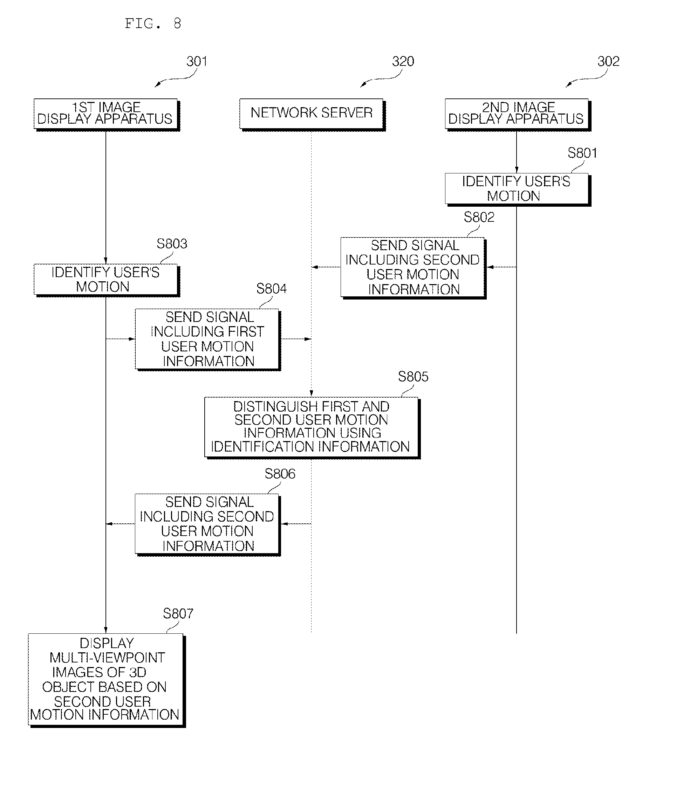

FIG. 8 is a diagram illustrating a signal flow for a method for controlling an operation of the image display system according to an embodiment of the present invention. In accordance with the embodiment of the present invention, a first image display apparatus 301 may receive user motion information (hereinafter, referred to as second user motion information) regarding a motion that a user of a second image display apparatus 302 (hereinafter, referred to as a second user) has made from the second image display apparatus 302 through a network server 320 or a direct connection such as a Peer-to-Peer (P2P) connection. The network server 320 is configured so as to be connected to the first image display apparatus 301 over a network such as the Internet. The first image display apparatus 301 may transmit a signal to or receive a signal from the network server 320, wirelessly or by cable.

Referring to FIG. 8, the second image display apparatus 302 identifies a motion that the second user has made (S801). In this embodiment, the second image display apparatus 302 may be provided with a motion sensor for sensing the second user's motion. Specifically, the second image display apparatus 302 may identify the second user's motion using a signal sensed by a motion sensor attached to a remote controller that the second user is manipulating.

Alternatively or additionally, the second image display apparatus 302 may include a camera module, particularly a camera. The second image display apparatus 302 may capture the second user's motion through the camera and generate an image signal carrying information about the captured second user's motion.

The second image display apparatus 302 transmits a signal including the second user motion information to the network server 320 (S802). The second image display apparatus 302 may transmit a signal to or receive a signal from the network server 320 wirelessly or by cable. In this embodiment, the second image display apparatus 302 transmits the signal including the second user motion information to the network server 320 over the Internet. In addition, the second image display apparatus 302 may transmit identification information of the second image display apparatus 302 to the network server 320. The identification information may be an IP address or device serial number assigned to the second image display apparatus 302.

In accordance with the embodiment of the present invention, the first image display apparatus 301 may have a user motion detector for detecting a motion that a user of the first image display apparatus 301 (hereinafter, referred to as a first user) is making. For example, the first image display apparatus 301 may be provided with a motion sensor, like the second image display apparatus 302. Alternatively or additionally, the first image display apparatus 301 may be provided with a camera, like the second image display apparatus 302.

The first image display apparatus 301 may identify a motion that the first user has made (S803) and transmit a signal including user motion information regarding the first user's motion (hereinafter, referred to as first user motion information) to the network server 320 (S804). In addition, the first image display apparatus 301 may transmit identification information of the first image display apparatus 301 to the network server 320. The identification information may be an IP address or device serial number assigned to the first image display apparatus 301.

The network server 320 may receive the signals from the first and second image display apparatuses 301 and 302 and may distinguish the first user motion information from the second user motion information, using the identification information of the first and second image display apparatuses 301 and 302 (S805).

The network server 320 transmits a signal including the second user motion information to the first image display apparatus 301 (S806). As stated above, the network server 320 distinguishes the second user motion information from the first user motion information based on the identification information of the first and second image display apparatuses 301 and 302 included in the received signals and then transmits the signal including the second user motion information to the first image display apparatus 301.

In this embodiment, the network server 320 may transmit the signal including the second user motion information to the first image display apparatus 301, at every predetermined interval. In another example, only if receiving the second user motion information from the second image display apparatus 302, the network server 320 may transmit the signal including the second user motion information to the first image display apparatus 301. In another example, upon receipt of the first user motion information from the first image display apparatus 301, the network server 320 may reply to the first image display apparatus 301 with the signal including the second user motion information. In a further example, the network server 320 detects a motion variation in the second user motion information and if the motion variation is equal to or larger than a predetermined threshold, the network server 320 may transmit the signal including the second user motion information to the first image display apparatus 301.

Meanwhile, the network server 320 may receive a signal including user motion information from a third image display apparatus other than the first and second image display apparatuses 301 and 302. For example, the user motion information may be about a motion that a user of a third image display apparatus (hereinafter, referred to as a third user) has made. This user motion information is referred to as third user motion information. Then the network server 320 may transmit a signal including both the second user motion information and the third user motion information to the first image display apparatus 301.

It may also be contemplated that the network server 320 transmits information about a background image as well as the second user motion information. Specifically, the first and second image display apparatuses 301 and 302 may execute an application that connects users of at least two image display apparatuses through a network, such as a game application, a conference application, a call application, a social networking application, etc. The network server 320 may transmit a signal including information about a background image corresponding to the application executed in an image display apparatus to the first image display apparatus 301.

The first image display apparatus 301 receives the signal from the network server 320 and displays an image based on the information included in the received signal (S807). More specifically, the first image display apparatus 301 may display a plurality of viewpoint images of a 3D object based on the second user motion information.

The 3D object may be a stereoscopic representation of the second user, that is, the user of the second image display apparatus 302. As the 3D object changes according to the second user motion information, the first user, that is, the user of the first image display apparatus 301 may be tricked into perceiving that the second user stays with the first user in the same space according to the embodiment of the present invention.

In addition to the 3D object rendered based on the second user motion information, the first image display apparatus 301 may display a 3D object based on the first user motion information. For rendering the 3D objects representing the first and second users of the first and second image display apparatuses 301 and 302, the controller 170, particularly the formatter 175 may generate a 3D image with a 3D object corresponding to user captured information of the first image display apparatus 301 (hereinafter referred to as first user captured information) and a 3D object corresponding to user capturing information of the second image display apparatus 302 (hereinafter referred to as second user captured information) and may control display of the 3D image with the 3D objects on the display 180. Instead of the controller 170, the network server 320 may generate the 3D image with the 3D objects. In this case, the controller 170 may control display of the 3D image received from the network server 320 on the display 180.

In the case where the network server 320 transmits background information about a background image to the first image display apparatus 301, the first image display apparatus 301 receives the background information along with the second user motion information. Thus the first image display apparatus 301 may display the background image based on the received background information. In this embodiment, the background image may be a planar image (i.e. a 2D image) that appears positioned on the plane of the display 180 to a user. Or the background image may be a 3D image that appears protruding toward the user from the plane of the display 180.

The controller 170 may output a 3D image including the background image and the 3D objects corresponding to the first and second user captured information of the first and second image display apparatuses 301 and 302.

Instead of the controller 170, the network server 320 may generate the 3D image including the background image and the 3D objects corresponding to the first and second user captured information. In this case, the controller 170 may control display of the 3D image received from the network server 320 on the display 180.

While the first and second image display apparatuses 301 and 302 are shown in FIG. 8 as exchanging information with each other through the network server 320, it is also possible for the first and second image display apparatuses 301 and 302 to exchange information via a direct connection such as a P2P connection.

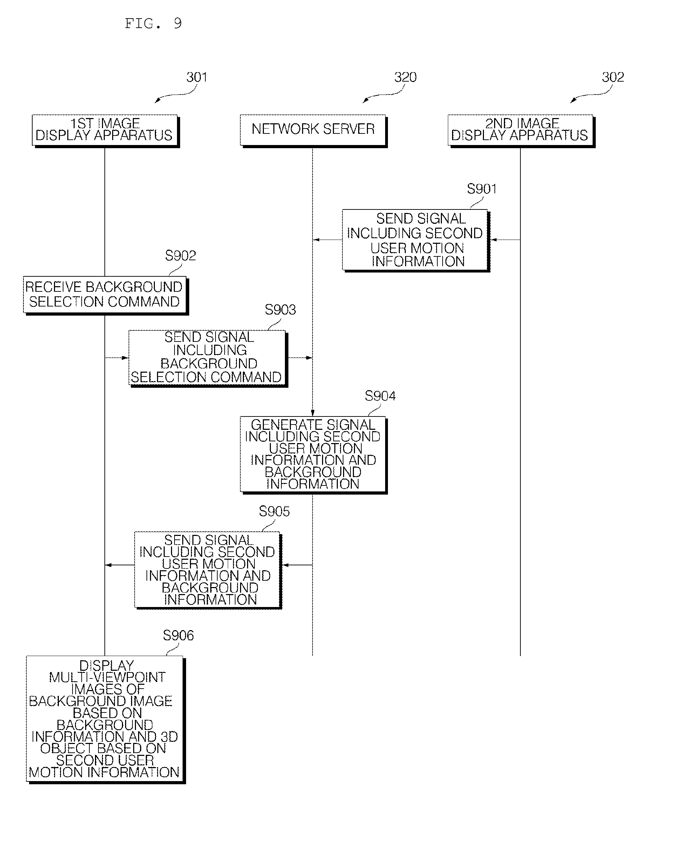

FIG. 9 is a diagram illustrating a signal flow for a method for controlling an operation of the image display system according to another embodiment of the present invention. In accordance with the embodiment of the present invention, the first image display apparatus 301 may select a background mage to be displayed on its display 180. More specifically, the first image display apparatus 301 may transmit to the network server 320 a background selection command to select one of background images available from the network server 320. The network server 320 may transmit background information about a background image indicated by the background selection command to the first image display apparatus 301. The background information may carry the requested background image or may specify information required to obtain the background image. The first image display apparatus 301 may display both an image based on the second user information received from the network server 320 and the background image based on the background information received from the network server 320 on the display 180.

Referring to FIG. 9, the second image display apparatus 302 transmits a signal including the second user motion information to the network server 320(S901). The network server 320 may identify the second user motion information based on identification information of the second image display apparatus 320 included in the received signal.

The first user inputs a background selection command to the first image display apparatus 301 (S902). Specifically, the first user may use, for example, the remote controller in entering the background selection command to the first image display apparatus 301. The first image display apparatus 301 may display thumbnails, icons, etc., representing background images available to the first user on the display 180. Thus the first user may enter the background selection command to the first image display apparatus 301 by selecting a thumbnail, an icon, etc., representing an intended background image.

The first image display apparatus 301 transmits a signal including the background selection command to the network server 320 (S903). Specifically, the first image display apparatus 301 may transmit the signal including the background selection command to the network server 320 over the Internet, wirelessly or by cable.

The network server 320 receives the signal including the background selection command from the first image display apparatus 301 and the signal including the second user motion information from the second image display apparatus 302. Then the network server 320 generates a signal including the second user motion information and background information based on the received signals (S904).

The network server 320 transmits the signal including the second user motion information and the background information to the first image display apparatus 301 (S905). To be more specific, the network server 320 may transmit the signal to the first image display apparatus 301 over the Internet. The network server 320 may use identification information of the first image display apparatus when transmitting the signal to the first image display apparatus 301.

Upon receipt of the signal including the second user motion information and the background information from the network server 320, the first image display apparatus 301 displays an image based on the received signal on the display 180 (S906). To be more specific, the first image display apparatus 301 may display the background image based on the background information included in the received signal on the display 180. In addition, the first image display apparatus 301 may display a plurality of viewpoint images representing the second user based on the second user motion information included in the received signal on the display 180. Thus the first user perceives a 3D object representing the second user by viewing the plurality of viewpoint images with his or her left or right eye.

In addition to the 3D object based on the second user motion information and the background image, a 3D object based on the first user motion information may be displayed together. A 3D image including the 3D objects representing the first and second users and the background image may be generated by the controller 170 or the network server 320, as described before.

It is also possible for the second image display apparatus 302 instead of the first image display apparatus 301 to transmit a background selection command to the network server 320.

In another embodiment of the present invention, the first image display apparatus 301 may display a background image based on a video signal stored in the first image display apparatus 301 or a video signal received from an external device connected to the first image display apparatus 301. The first image display apparatus 301 may also transmit the video signal stored in the first image display apparatus 301 or received from the external device to the network server 320. Then the network server 320 may transmit a video signal forming the background image received from the first image display apparatus to the second image display apparatus 302. The second image display apparatus 302 may display the background image based on the received video signal.

In a further embodiment of the present invention, the first image display apparatus 301 may store a video signal received from the external device connected to the first image display apparatus 301 or a video signal received from the network server 320 and may display a background image based on the stored video signal. The first user may change a current background image displayed on the first image display apparatus 301 to a background image based on one of video signals stored in the first image display apparatus 301.

While the first and second image display apparatuses 301 and 302 are shown in FIG. 9 as exchanging information with each other through the network server 320, it is also possible for the first and second image display apparatuses 301 and 302 to exchange information via a direct connection such as a P2P connection.

FIG. 10 is a view referred to for describing a method for controlling an operation of the first image display apparatus 301 according to an embodiment of the present invention. Referring to FIG. 10, the first image display apparatus 301 displays an image based on a signal received from the network server 320 so that the first user may view the image on the display 180. The first image display apparatus 301 may display the multi-viewpoint images of first and second 3D objects 1001 and 1002 on a plane (or a display plane) D1 of the display 180 in such a manner that the first and second 3D objects 1001 and 1002 look protruding from the display plane D1.

The first user may view the multi-viewpoint images displayed on the display plane D1 with his or her left and right eyes. The first user is tricked into perceiving the 3D objects 1001 and 1002 as protruding toward the first user from the display plane D1 by distances a and b, respectively.

The 3D objects 1001 and 1002 are rendered in correspondence with second and third user motion information received from the second image display apparatus 302 and a third image display apparatus connected to the first image display apparatus 301 through the network server 320. More specifically, the first 3D object 1001 rendered based on the second user motion information transmitted by the second image display apparatus 302 may change in shape according to a motion that the second user has made. Likewise, the second 3D object 1002 rendered based on the third user motion information transmitted by the third image display apparatus may change in shape according to a motion that the third user of the third image display apparatus has made.

In this embodiment, the second image display apparatus 302 captures the second user's motion through a camera. Specifically, the second image display apparatus 302 captures the second user's motion using at least two cameras, generates a 3D image signal based on the captured images of the second user's motion, and transmits the 3D image signal to the network server 320.

Like the second image display apparatus 302, the third image display apparatus captures the third user's motion through a camera. Specifically, the third image display apparatus captures the third user's motion using at least two cameras, generates a 3D image signal based on the captured images of the third user's motion, and transmits the 3D image signal to the network server 320.

Upon receipt of the 3D image signals from the second and third image display apparatuses, the network server 320 generates a 3D image signal including the first and second 3D objects 1001 and 1002 by combining the received 3D image signals to display the first and second 3D objects 1001 and 1002 on the same screen. Then the network server 320 transmits the generated 3D image signal to the first image display apparatus 301. The first image display apparatus 301 displays the multi-viewpoint images of the received 3D image signal on the display plane D1.

In another example, the network server 320 may forward the 3D image signals received from the second and third image display apparatuses to the first image display apparatus 301. Then the first image display apparatus 301 may convert the received 3D image signals to a 3D image signal including the first and second 3D objects 1001 and 1002 by combining the received 3D image signals to display the first and second 3D objects 1001 and 1002 on the same screen. Then the first image display apparatus 301 displays the multi-viewpoint images of the 3D image signal on the display plane D1.

The first user may identify the second user's motion and the third user's motion from the first and second 3D objects 1001 and 1002, respectively. The first user may adjust positions at which the first and second 3D objects 1001 and 1002 are displayed. For example, a user 1003 of the first image display apparatus 301 (i.e. the first user) may exchange the displayed positions of the first and second 3D objects 1001 and 1002. The first user may further change the depths, sizes, etc., of the first and second 3D objects 1001 and 1002.

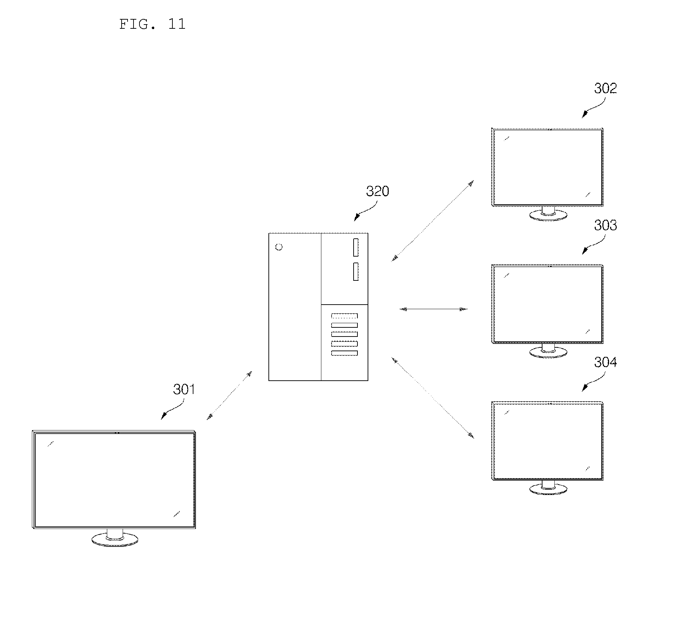

FIG. 11 illustrates an image display system including image display apparatuses and a network server according to an embodiment of the present invention. Referring to FIG. 11, the image display system according to the embodiment of the present invention includes the network server 320 and at least two image display apparatuses 301 to 304 for transmitting and receiving signals including a 3D image signal through the network server 320. In this embodiment, each of the image display apparatuses 301 to 304 may transmit a signal carrying user motion information to the network server 320.

The network server 320 may transmit the signal received from each of the image display apparatuses 301 to 304 to another image display apparatus. Therefore, upon receipt of a signal including user motion information regarding a motion of a user of an image display apparatus, the controller 170 of another image display apparatus may generate a 3D image including a 3D object representing the user of the image display apparatus based on the received signal.

In another example, the network server 320 may forward to the first image display apparatus 301 3D image signals including user motion information regarding motions of the users of the second, third and fourth image display apparatuses.

In a further example, the network server 320 may generate 3D image signals based on user motion information regarding motions of the users of the second, third and fourth image display apparatuses, included in signals received from the second, third and fourth image display apparatuses. More specifically, the network server 320 may generate a 3D image signal including 3D objects representing the users of the second, third and fourth image display apparatuses and transmit the 3D image signal to the first image display apparatus 301.

In accordance with the embodiment of the present invention, an image display apparatus in the image display system can execute a network application, such as a game application, that connects a user of the image display apparatus to a user of another image display apparatus. The image display apparatuses may display the same screen during execution of the network application. That is, the image display apparatuses 301 to 304 connected to the network server 320 may display the same background image.

It may be further contemplated as another embodiment of the present invention that the image display apparatuses display different screens during execution of the network application. That is, the image display apparatuses 301 to 304 connected to the network server 320 display different background images in such a manner that the user of each image display apparatus may see the same space from a different viewpoint.

The network server 320 may transmit an image signal by which to form a background image to the image display apparatuses 301 to 304 connected to the network server 320. Thus the image display apparatuses 301 to 304 may display the background image based on the received image signal. In another embodiment of the present invention, the image display apparatuses 301 to 304 may display background images based on video signals stored in them or video signals received from external devices connected to them.

Each of the image display apparatuses 301 to 304 may select a background image available from the network server 320. The network server 320 may transmit an image signal associated with the selected background image to the image display apparatus.

Compared to the configuration of the image display system illustrated in FIG. 11, the image display apparatuses 301 to 304 may be configured in parallel without the network server 320 in between. Therefore, the image display apparatuses 301 to 304 may exchange information via a direct connection such as a P2P connection, as described before.

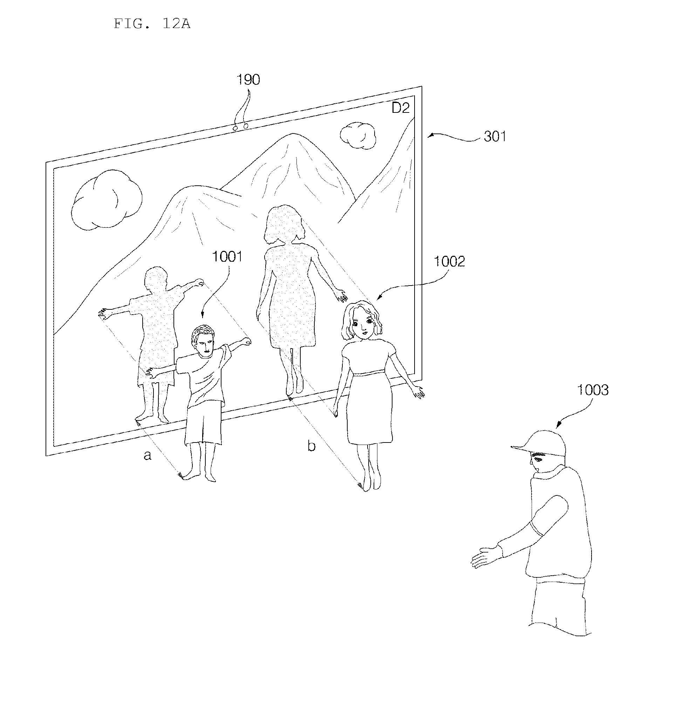

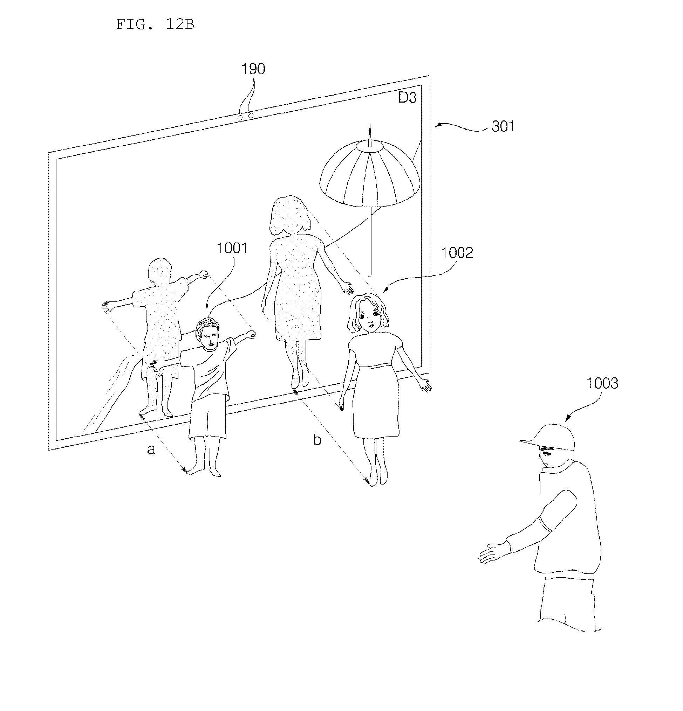

FIGS. 12A and 12B are views referred to for describing a method for controlling an operation of the first image display apparatus 301 according another embodiment of the present invention.

In this embodiment, the first image display apparatus 301 may display a background image based on an image signal received from the network server 320 on the plane of the display 180. The received image signal may correspond to a background image selected by the first user.

Aside from rendering a background image based on an image signal received from the network server 320, the first image display apparatus 301 may display a background image based on a video signal stored in the first image display apparatus 301 or received from an external device. The first user may input a command for selecting a video signal corresponding to an intended background image from among stored video signals or video signals received from external devices to the first image display apparatus 301.

The first image display apparatus 301 may change a background image displayed on the plane of the display 180 to a background image indicated by the background selection command input by the first user 1003. To be more specific, the first image display apparatus 301 may replace a background image displayed on a display plane D2 in FIG.12A with a background image displayed on a display plane D3 in FIG. 12B. Thus, the first image display apparatus 301 may override the background image received from the network server 320.

In another embodiment of the present invention, the first image display apparatus 301 may change a background image displayed on the plane of the display 180 in correspondence with an image signal received from the network server 320. For example, upon receipt of an image signal representing a particular background image from the second image display apparatus 302, the network server 320 may forward the received image signal to the first image display apparatus 301. Then the first image display apparatus 301 displays the background image based on the received image signal. Since the received image signal is for forming the background image transmitted by the second image display apparatus 302, the first image display apparatus 301 displays the background image.

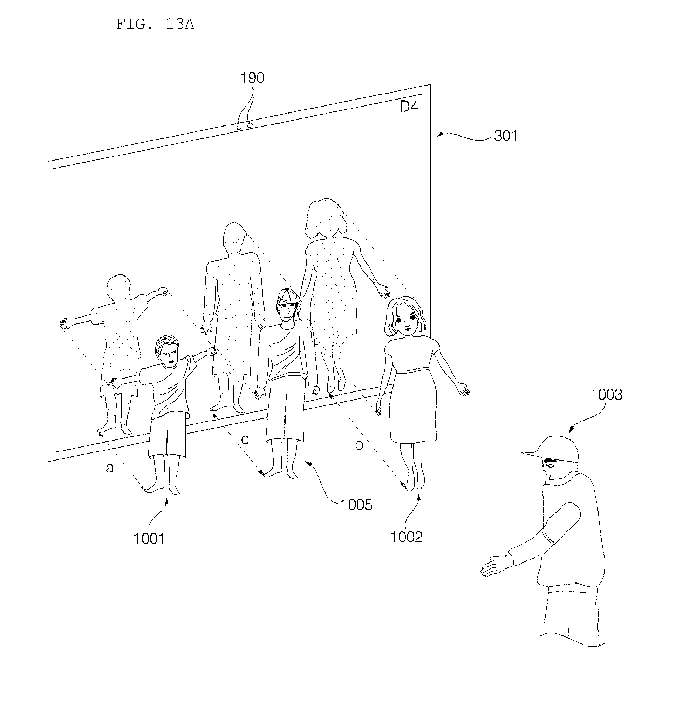

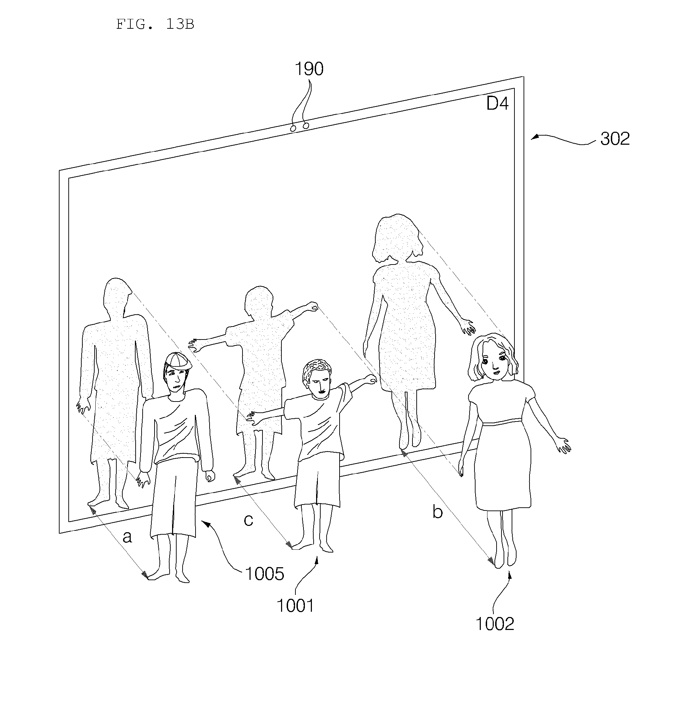

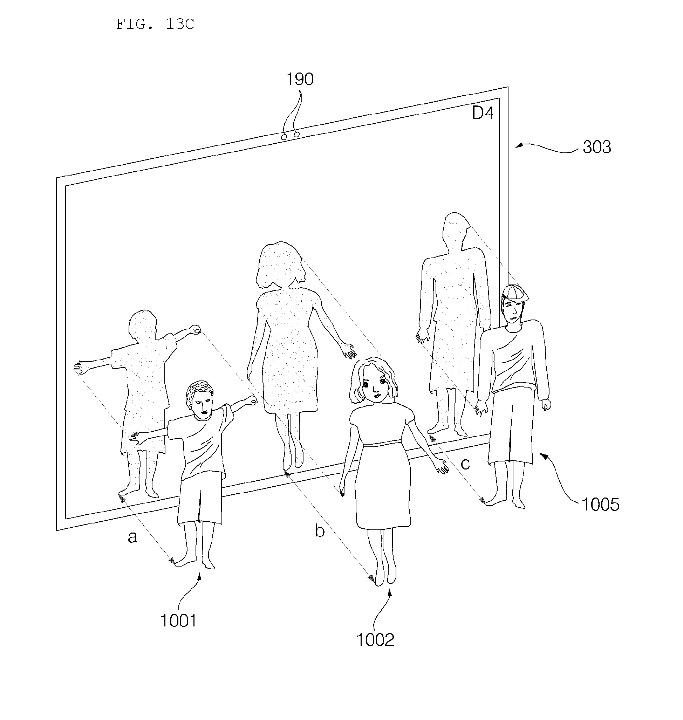

FIGS. 13A, 13B and 13C are views referred to for describing a method for controlling an operation of the first image display apparatus 301 according to another embodiment of the present invention. Referring to FIG.13A, the first image display apparatus 301 may display a background image including a 3D object. Specifically, the first image display apparatus 301 displays the multi-view point images of a third 3D object 1005 that appears protruding toward the first user 1003 from a display plane D4 by a distance c. The first user 1003 perceives the third 3D object 1005 by viewing the multi-view point images of the third 3D object 1005 displayed on the display plane D4 with his or her left and right eyes.

More specifically, the first image display apparatus 301 may display a background image on the display plane D4 based on a 3D image signal received from the network server 320. Additionally, the network server 320 may generate a 3D image signal including a 3D object representing a user of another image display apparatus and a 3D object included in the background image or may convert a received signal to the 3D image signal. Then the network server 320 may transmit the 3D image signal to the first image display apparatus 301.

The first user 1003 of the first image display apparatus 301 may change the displayed positions of the 3D objects 1001, 1002 and 1003. For example, the first user 1003 may exchange the displayed positions of the first 3D object 1001 representing the second user and the second 3D object 1002 representing the third user, that is, the user of the third image display apparatus 303. The first user 1003 may further change the depth of the third 3D object 1005, as well as the other 3D objects 1001 and/or 1002.

In this embodiment, a 3D object included in the background image may be a 3D object included in an image displayed during execution of an application in the first image display apparatus 301. If the application is a card game application, card-shaped 3D objects may be included in the background image. The 3D objects representing the users of other image display apparatuses may take the form of members participating in the card game. Therefore, as the first user 1003 views the 3D objects representing the users of the other image display apparatuses and the card-shaped 3D objects, the first user 1003 is tricked into perceiving that the first user 1003 is playing cards with the users of the other image display apparatuses.

Referring to FIG. 13A, the 3D objects 1001 and 1002 are positioned on the left and right sides of the 3D object 1005 representing the first user 1003. Referring to FIG. 13B, the 3D objects 1005 and 1002 are positioned on the left and right sides of the 3D object 1001 representing the second user of the second image display apparatus 302 on the display of the second image display apparatus 302. In FIG. 13C, the 3D objects 1001 and 1005 are positioned on the left and right sides of the 3D object 1003 representing the third user on the display of the third image display apparatus 303. In this manner, different 3D images may be displayed in the image display apparatuses 301, 302 and 303. Especially, the 3D images may be user-customized.

Instead of displaying the 3D objects 1001, 1003 and 1005 together in FIG. 13A, the 3D object 1005 may first be displayed according to information about a captured image of the first user 1003, that is, first user captured information. Then upon receipt of second and third user captured information about captured images of the second and third users or the 3D objects 1001 and 1002 representing the second and third users from the network server 320, the first image display apparatus 301 may display the 3D objects 1001 and 1002, as illustrated in FIG.13A.

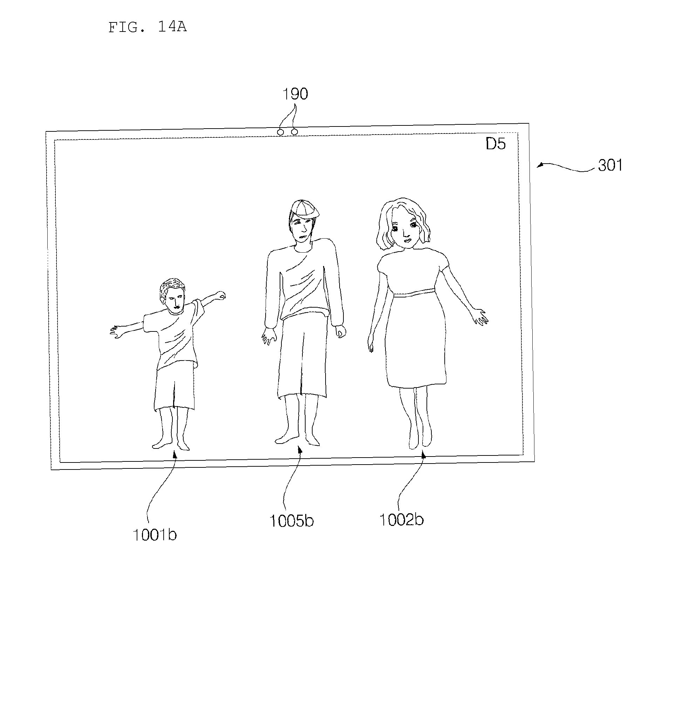

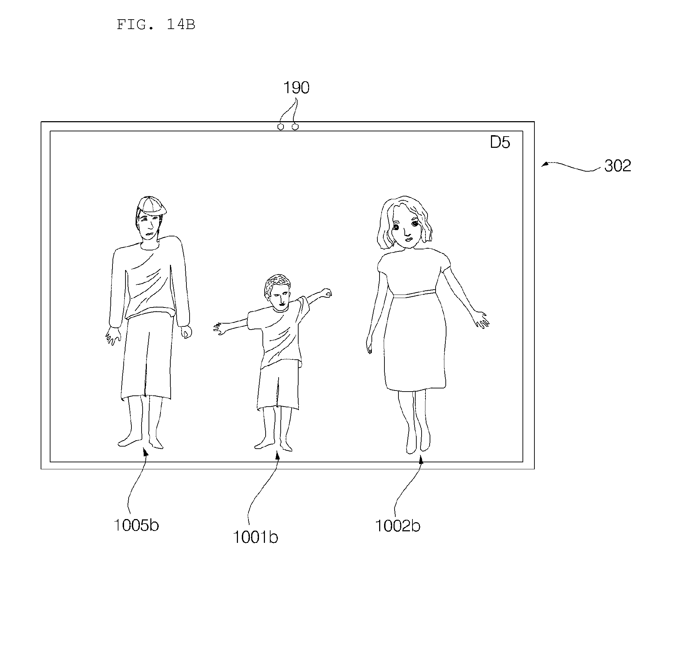

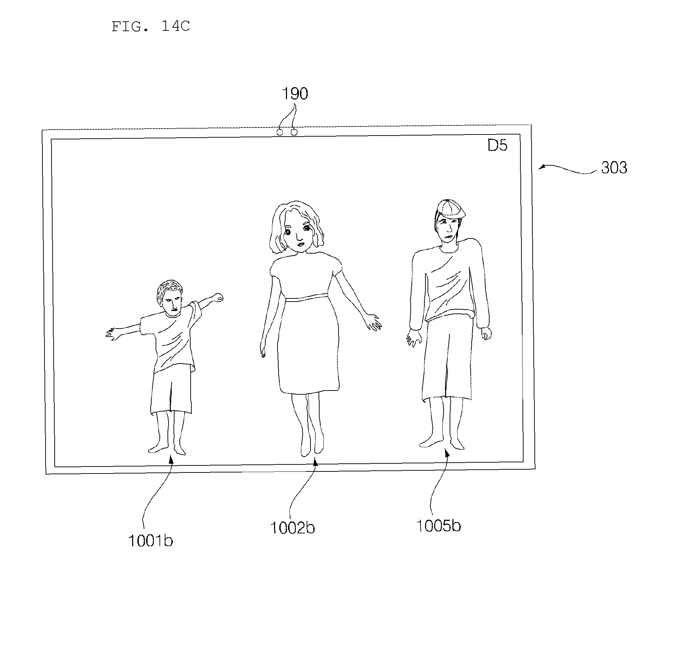

FIGS. 14A, 14B and 14C are views referred to for describing a method for controlling an operation of the first image display apparatus 301 according to another embodiment of the present invention. Referring to FIG.14A, the first user of the first image display apparatus 301 may store 3D objects displayed on the first image display apparatus 301 in the form of a planar image (i.e. a 2D image) like a picture. That is, the first user may store the 3D objects as a 2D image that could be achieved by taking a picture of the 3D objects.

For example, the first user may input a photo save command to the first image display apparatus 301 that displays the multi-viewpoint images of 3D objects as illustrated in FIG.13A. Thus the first image display apparatus 301 may convert the 3D image viewed by the first user to a planar image and store the planar image, as illustrated in FIG. 14A. In the planar image, the first, second and third 3D objects 1001, 1002 and 1005 of FIG. 13A are converted to 2D objects 1001b,1002b and 1005b of FIG.14A.

In another embodiment of the present invention, the first image display apparatus 301 may store a still image version of the 3D image viewed by the first user 1003. The 3D still image contains the first, second and third 3D objects 1001, 1002 and 1005 illustrated in FIG. 13A. Upon receipt of a 3D playback command from the first user 1003, the first image display apparatus 301 may play back the stored 3D still image. The first user 1003 may store a 3D image including the 3D objects representing the second and third users and 3D objects included in the background image and then play back the stored 3D image.

In FIG. 14A, the planar objects 1001 b and 1002b are positioned on the left and right sides of the planar object 1005b representing the first user 1003. In FIG. 14B, the planar objects 1005b and 1002b are positioned on the left and right sides of the planar object 1001b representing the second user of the second image display apparatus 302, on the display of the second image display apparatus 302. In FIG. 14C, the planar objects 1001b and 1005b are positioned on the left and right sides of the planar object 1003b representing the third user of the third image display apparatus 303, on the display of the third image display apparatus 303. In this manner, different planar images may be displayed in the image display apparatuses 301, 302 and 303. Especially, the planar images may be user-customized.

Instead of displaying the planar objects 1001 b, 1003b and 1005b together in FIG. 14A, the planar object 1005b may first be displayed according to first user captured information. Then upon receipt of second and third user captured information or the planar objects 1001b and 1002b representing the second and third users from the network server 320, the first image display apparatus 301 may display the planar objects 1001 and 1002, as illustrated in FIG.14A.

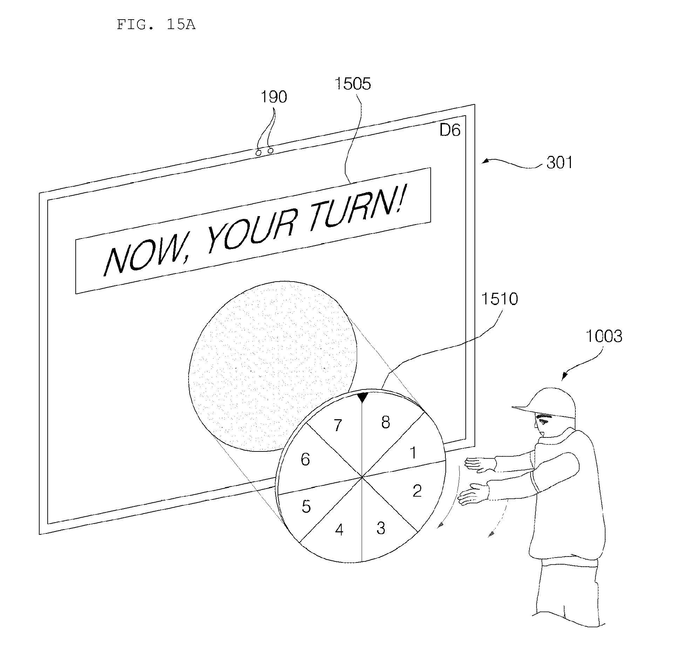

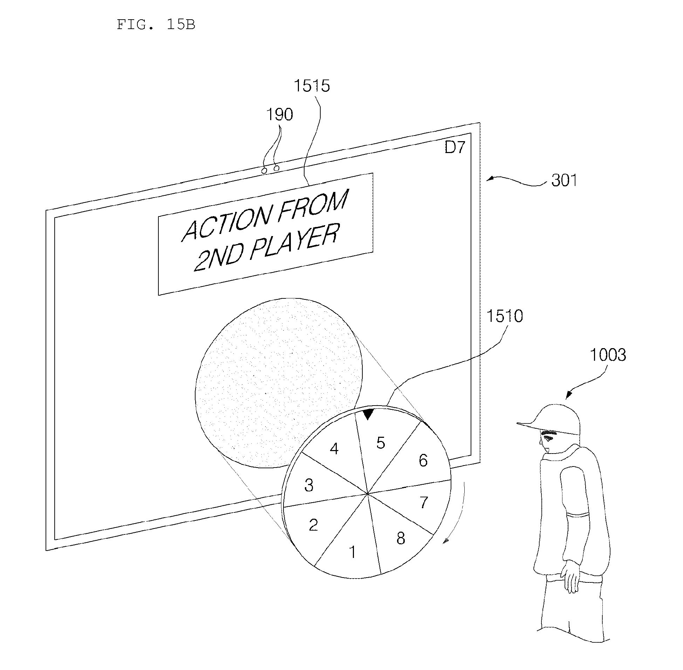

FIGS. 15A and 15B are views referred to for describing a method for controlling an operation of the first image display apparatus 301 according to another embodiment of the present invention. The first and second image display apparatuses 301 and 302 may share a common 3D object and the common 3D object may change in accordance with user captured information of each user or a gesture input from each user.

FIG. 15A illustrates example display of a common 3D object 1510, such as spinning a wheel, on the display 180 of the first image display apparatus 301. The common 3D object 1510 may be a preset object that can be displayed in 3D commonly between the first and second image display apparatuses 301 and 302. For common 3D visualization of the common 3D object 1510, the network server 320 may transmit the common 3D object 1510 to both the first and second image display apparatuses 301 and 302. As described before, the common 3D object 1510 may be displayed when an application requiring interactive actions such as a game application, a messenger application, etc., is executed.

To transmit or receive a captured image or gesture information between the first and second image display apparatuses 301 and 302, priority may be assigned to one of the first and second image display apparatuses 301 and 302 over the other image display apparatus for a predetermined time period. As illustrated in FIG. 15A, an object 1505, such as text, prompting the first user 1003 to take an action may be displayed for a first time period. When the first user 1003 makes a gesture to interact with the common 3D object 1510 or manipulates the remote controller 200, the first image display apparatus 301 may change the displayed state of the common 3D object 1510 in accordance with the gesture or the manipulation of the remote controller 200. In FIG. 15A, the common 3D object 1510 is rotated, by way of example, a rotating gesture performed by the first user 1003.

FIG. 15B illustrates example changed display of the common 3D object 1510 by the first image display apparatus 301, upon receipt of information about a captured image of the second user or a gesture input of the second user from the network server 320 or the second image display apparatus 302. The common 3D object 1510 further rotates in FIG. 15B, by way of example. That is, without an additional gesture or additional user captured information of the first user 1003, the common 3D object 1510 is displayed as further rotated. In this manner, the first and second image display apparatuses 301 and 302 can share information regarding interactive actions.

Meanwhile, upon receipt of information about a captured image of the second user or a gesture input of the second user from the network server 320 or the second image display apparatus 302, the first image display apparatus 301 may display an object 1515, such as text, that alerts the first user to the reception of the second user captured information or the gesture input of the second user. Accordingly, the first user is easily aware of an input from the user of another image display apparatus.

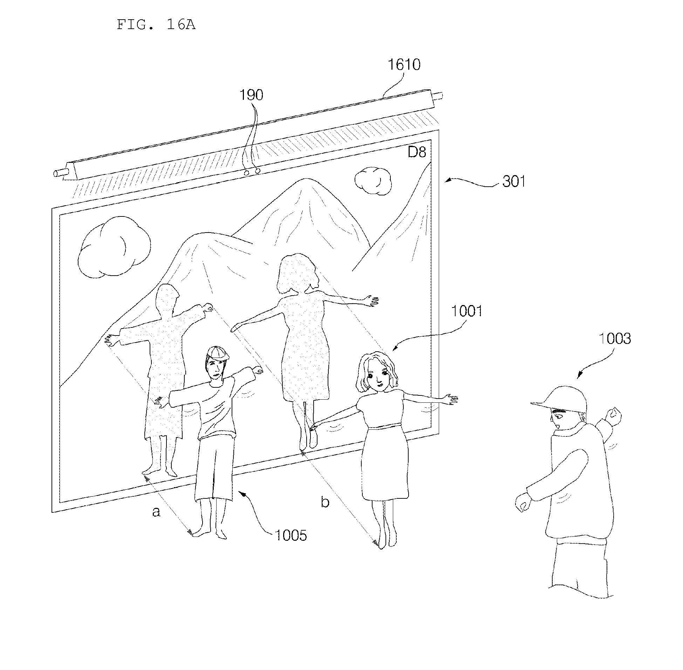

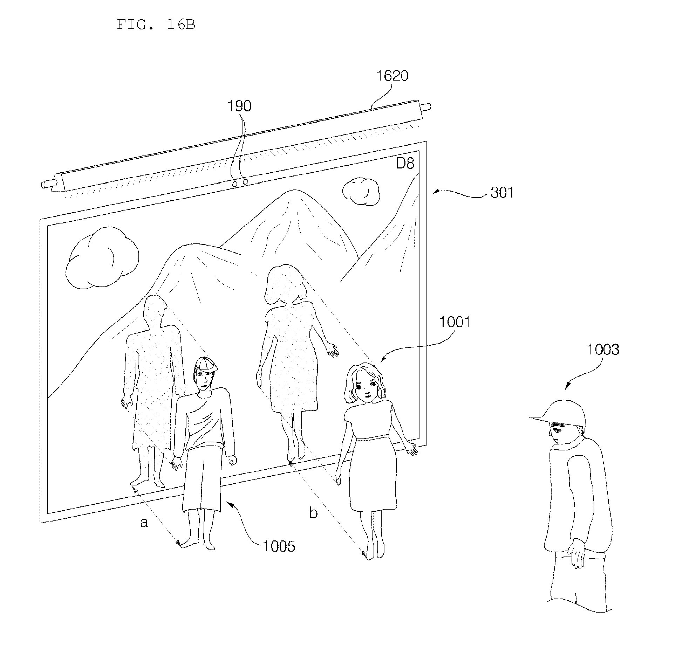

FIGS. 16A and 16B are views referred to for describing a method for controlling an operation of the first image display apparatus 301 according to another embodiment of the present invention. The first or second image display apparatus 301 or 302 may change at least one of ambient lighting, audio volume, or image luminance of the first or second image display apparatus 301 or 302 according to at least one of user captured information of the first and second users, that is, at least one of first and second user captured information.

FIG. 16A illustrates example display of the 3D object 1005 corresponding to the first user captured information and the 3D object 1001 corresponding to the second user captured information on the first image display apparatus 301. If the level of a motion indicated by at least one of the first user motion information or the second user motion information is equal to or larger than a predetermined threshold, that is, a user's motion is brisk, the luminance of an ambient lighting device 1610 may be increased to suit the brisk atmosphere. The luminance control may be carried out through remote communication with the ambient lighting device 1610.

It is also possible to increase audio volume or the overall luminance of a 3D image. Thus the 3D image can be reproduced to suit a given situation. Meanwhile, if the motion level is equal to or larger than the threshold, the luminance or audio volume may be decreased.

FIG.16B illustrates another example display of the 3D object 1005 corresponding to the first user captured information of the first user 1003 and the 3D object 1001 corresponding to the second user captured information of the second user on the first image display apparatus 301. If the level of the motion indicated by at least one of the first user motion information or the second user motion information is below the predetermined threshold, that is, a user's motion is stationary, the luminance of then ambient lighting device 1610 may be decreased to reflect the inactive atmosphere. It is also possible to decrease audio volume or the overall luminance of a 3D image. Thus the 3D image can be reproduced to suit a given situation. Meanwhile, if the motion level is below the threshold, the luminance or audio volume may be increased.

As is apparent from the above description of embodiments of the present invention, an image display apparatus can represent a motion of a user of another image display apparatus connected to the image display apparatus through a network, using a 3D object.

The image display apparatus can transmit user motion information about a motion of its user to another image display apparatus. These image display apparatuses can be connected to each other through a network server.

The network server can identify the image display apparatus from which a signal including the user motion information has been received.

The network server can also transmit a signal including information about a background image to the image display apparatus.

Thus the image display apparatus can receive the user motion information of another image display apparatus or the information about the background image from the network server.

The image display apparatus can display a background image or a plurality of viewpoint images of a 3D object, based on the received information.

The image display apparatus and the method for controlling the same according to the foregoing embodiments are not restricted to the embodiments set forth herein. Therefore, variations and combinations of the example embodiments set forth herein may fall within the scope of the present invention.

The method for controlling an image display apparatus according to the foregoing embodiments may be implemented as code that can be written to a non-transitory computer-readable recording medium and can thus be read by a processor. The computer-readable recording medium may be any type of recording device in which data can be stored in a computer-readable manner. Examples of the computer-readable recording medium include a ROM, a RAM, a CD-ROM, a magnetic tape, a floppy disc, and an optical data storage. The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

In one or more embodiments of the present invention, reference to and/or refers to at least one of the listed items.

While the present invention has been particularly shown and described with reference to example embodiments thereof, it will be understood by those of ordinary skill in the art that various changes in form and details may be made therein without departing from the spirit and scope of the present invention as defined by the following claims.

## Claims

1. A method for controlling an image display apparatus that displays a 3-dimensional (3D) image, the method comprising:
generating first user captured information representing a captured image of a first user (1003) of the image display apparatus;
receiving second user captured information representing a captured image of a second user of the another image display apparatus from a server (320) or the another image display apparatus; and
displaying at least one of a 3D object (1005) corresponding to the first user (1003) captured information and a 3D object (1001) corresponding to the second user captured information with a background image.

2. The method according to claim 1, further comprising generating the at least one of the 3D object (1005) corresponding to the first user (1003) captured information and the 3D object (1001) corresponding to the second user captured information.

3. The method according to claim 1, wherein the first user captured information includes first user motion information representing a motion of the first user (1003) and the second user captured information includes second user motion information representing a motion of the second user.

4. The method according to claim 1, further comprising receiving the background image from the server or the another image display apparatus,
wherein the displaying comprises displaying the received background image together with the at least one of the 3D object (1005) corresponding to the first user captured information and the 3D object (1001) corresponding to the second user captured information.

5. The method according to claim 4, further comprising transmitting a background selection command for selecting the background image to the server or the another image display apparatus, wherein the background image received from the server or the another image display apparatus is the background image selected according to the background selection command.

6. The method according to claim 1, wherein the reception of the second user captured information comprises receiving an image including the at least one of the 3D object (1005) corresponding to the first user captured information and the 3D object (1001) corresponding to the second user captured information.

7. The method according to claim 4, further comprising generating a 3D image including the background image, and the at least one of the 3D object (1005) corresponding to the first user captured information and the 3D object (1001) corresponding to the second user captured information.

8. The method according to claim 1, wherein the reception of the second user captured information comprises receiving a 3D image including the background image, and the at least one of the 3D object (1005) corresponding to the first user captured information and the 3D object (1001) corresponding to the second user captured information.

9. The method according to claim 1, further comprising displaying a common variable 3D object (1510) based on the first or second user captured information, the common variable 3D object (1510) being sharable between the first user (1003) and the second user.

10. The method according to claim 1, further comprising:
transmitting identification information of the image display apparatus to the server (320) or the another image display apparatus (302); and
receiving identification information of the another image display apparatus (302) from the server (320) or the another image display apparatus (302).

11. An image display apparatus that displays a 3-dimensional (3D) image, the image display apparatus comprising:
a camera module (190) configured to capture an image of a first user (1003) of the image display apparatus;
a network interface (120) configured to transmit first user captured information representing the captured image of a first user (1003) of the image display apparatus to a server or another image display apparatus other than the image display apparatus, or receive second user captured information representing a captured image of a second user of the another image display apparatus from the server or the another image display apparatus; and
a controller (170) configured to control display of at least one of a 3D object (1005) corresponding to the at least one of the first user captured information and a 3D object (1001) corresponding to the second user captured information on the display with a background image.

12. The image display apparatus according to claim 11, wherein the controller (170) generates the at least one of the 3D object (1005) corresponding to the first user captured information and the 3D object (1001) corresponding to the second user captured information.

13. The image display apparatus according to claim 11, wherein the network interface (120) further receives the background image from the server or the another image display apparatus, and the controller (170) controls display of the received background image together with the at least one of the 3D object (1005) corresponding to the first user captured information and the 3D object (1001) corresponding to the second user captured information.

14. The image display apparatus according to claim 11, further comprising a user input unit (140) configured to input a command to the image display apparatus,
wherein the network interface (120) transmits a background selection command for selecting the background image, received from the user input unit (140), to the server (320) or the another image display apparatus (302).

15. The image display apparatus according to claim 11, further comprising a memory (150) configured to store the background image received through the network interface (120).
